Europäisches Patentamt

European Patent Office

Office européen des brevets

(11) Publication number: **0 043 230**
**B1**

(12) **EUROPEAN PATENT SPECIFICATION**

(45) Date of publication of patent specification: **06.03.85**

(51) Int. Cl.⁴: **B 62 K 21/12**

(21) Application number: **81302842.0**

(22) Date of filing: **24.06.81**

(54) **Covering for cycle handlebars.**

(30) Priority: **27.06.80 JP 91243/80 u**

(43) Date of publication of application:
**06.01.82 Bulletin 82/01**

(45) Publication of the grant of the patent:
**06.03.85 Bulletin 85/10**

(84) Designated Contracting States:
**BE DE FR GB IT**

(56) References cited:
**EP-A-0 001 646**
**EP-A-0 035 855**
**GB-A-1 442 231**
**US-A-3 964 339**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho Midorigaoka-Minamimachi**
**Sakai-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a covering for cycle handlebars.

In general, bicycle handlebars are made of metal tubing. Such handlebars are however relatively cold to the touch and somewhat hard and uncomfortable to grip. In addition a rider's grip may slip thereon under hot or damp conditions when moisture is present on the handlebars, especially in case of drop-type handlebars. Conventionally, therefore handlebars are wound with cloth tape or the like in an attempt to reduce these problems.

Since with drop-type handlebars the rider tends in practice to grip them at a plurality of different parts of the straight and arcuate sections thereof it is necessary for the tape to be wound around the handlebars along the full length thereof. The application of the tape to the handlebars is, however, rather troublesome and time consuming and replacement is also difficult and time consuming due to the troublesome procedure for the removal of the old or damaged tape.

The European Patent Application EP—A—0001646 discloses a covering for a cycle handle according to the prior art part of claim 1. However the known covering is not easily and not readily removable from the handlebars.

It is an object of the present invention to avoid or minimise one or more of the abovementioned disadvantages.

The present invention provides a covering for cycle handlebars which covering comprises an elongate body having a hollow interior and formed of a synthetic foam material characterised by an open slit extending along one side of said covering, through which slit said hollow interior is open to the exterior, said handlebars being disposable in the hollow interior in use of said covering, and a closure for closing said open slit in said body.

The handlebars covering of the invention can be fitted onto the handlebars simply and quickly by pushing it sideways onto the handlebar, thereby avoiding the tedious and awkward winding of the tape round and round the handlebars of conventional coverings.

Since the body is formed of synthetic foam material it can be readily made with a close fit around the handlebars thereby providing a stable mounting of the covering on the handlebars. It can also be made of a relatively soft and resiliently deformable material providing a secure and comfortable grip for the rider. This can also help to protect the rider against injury from impact with the handlebars arising for example during a collision of the cycle.

In addition the covering of the invention can be readily formed with a generally elliptical, streamlined, cross-sectional shape thereby reducing drag on the handlebars resulting from turbulent air-flows around the handlebars. Also suitable ducts and passages for one or more control cables can be provided internally of the covering and extending from an associated control lever position to, for example, a position adjacent the head tube. This can result in considerably reduced drag and air resistance in comparison with conventional systems in which the control cables extend substantially from and along the handlebars giving rise to turbulent air flows therearound as well as giving rise to the possible danger of the cables catching on a foreign body.

Further preferred features and advantages of the invention will appear from the following description given by way of example of a preferred embodiment illustrated with reference to the accompanying drawings in which:

Fig. 1 is a perspective view of a cycle handlebars of the drop-type provided with a covering of the invention;

Fig. 2 is a partially interrupted elevation of the covering of Fig. 1 prior to mounting on a pair of handlebars;

Fig. 3 is a transverse cross-sectional view of the covering of Figs. 1 and 2, on an enlarged scale; and

Fig. 4 is a detail longitudinal cross-sectional view of one end of the covering of Figs. 1 to 3, on an enlarged scale.

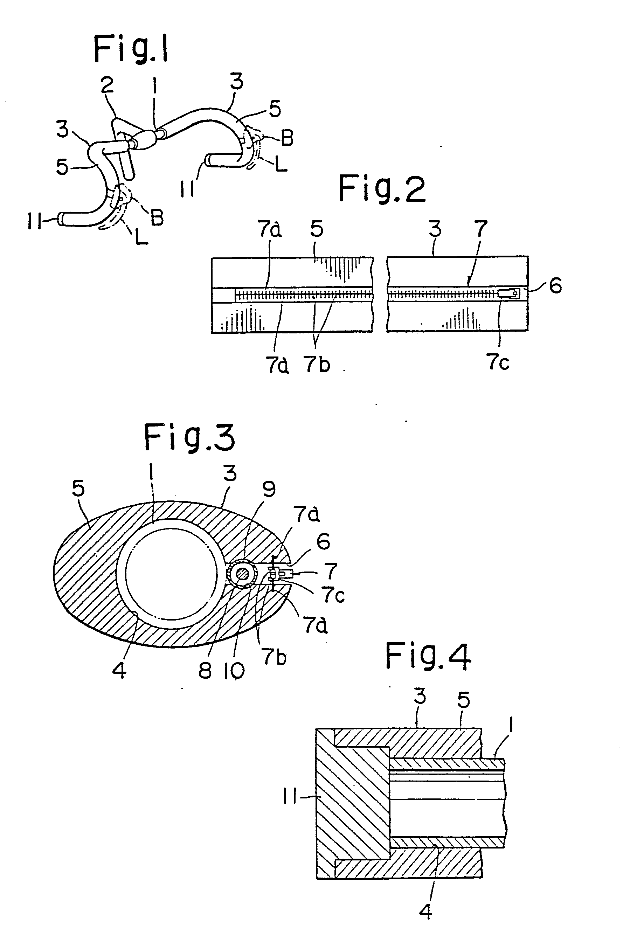

The drop-type handlebars 1 shown in Fig. 1 comprises a central horizontal portion and two cranked portions arcing forwardly from both ends of the central horizontal portion and then arcing downwardly and rearwardly to terminal straight portions. A handlebars stem 2 is secured to the middle of the central horizontal portion. .

A covering 3 of the invention is mounted on the handlebars 1 and is constructed as follows:

A body 5 has a hollow generally cylindrical interior 4, into which the handlebars 1 is insertable and is formed of a synthetic resin polymeric foam material, such as foamed urethane or foamed styrene and has a slit 6 open along one side to provide access to the hollow interior 4 from the outside of the covering. The slit 6 is provided with a closure 7 for closing thereof.

The slit 6 extends along the full length of the body 5 and has a width considerably smaller than the outer diameter of the handlebars 1. By using though a resiliently deformable synthetic foam material the parts of the body 5 on either side of the slit 6 may be bent back to allow introduction of the handlebars 1 to the interior 4. The material and the width of the slit are desirably chosen so that the body 5 is sufficiently resilient to grip the handlebars 1 tightly enough to provide a reasonably stable mounting of the covering on the handlebars during riding and to permit bending back of said parts of the body 5 far enough to allow entry of the handlebars 1 to the body interior 4.

The body 5 in the illustrated embodiment has, in transverse cross-section, a major axis and a minor axis intersecting perpendicularly with each other and is in the form of a substantially symmetrical ellipse. In use the covering is mounted so that the major axis extends generally longitudinally of the cycle, so that the drag and air resistance during running of the cycle is reduced. Alternatively, the body 5 could if desired be made symmetrical about the major axis only, being non-symmetrical about the minor axis, to have a substantially streamlined transverse cross-sectional shape.

Between the opposed sides of the open slit 6 in the body 5 is provided a conduit means in the form of opposed recesses 10 for accommodating a control cable comprising a control wire 8 and an outer sheath 9 therefor. The control cable is connected to a control lever $L$, suitably for the brakes, the control cable being led through the conduit means defined between the opposed recesses 10. As an alternative the conduit means could be provided elsewhere in the interior of the body away from said slit 6.

The disposition of the conduit means 10 in said slit 6 however facilitates insertion of the control cable therein since it can be simply pushed in sideways on through said slit bending back the opposed parts of the body 5 as necessary. Removal is also correspondingly facilitated.

The control cable could if desired instead be in the form of a control wire 8 alone i.e. without a sheath therefor. In either case, the cable is led out of the body in proximity to the control lever $L$ and then connected thereto.

The slit closure 7 may be in the form of a longitudinally extending snap-lock or male-female type fastener, but desirably uses a slide fastening as shown, the slide fastening having at opposed edges of mounting strips 7a chucks or teeth 7b connected and disconnected as required by a sliding clasp 7c. The mounting strips 7a are conveniently embedded in the opposed side walls of the slit 6 when the body 5 is formed e.g. moulded.

When the body 5 is, as shown in Fig. 1, divided into two parts disposed on respective sides of the handlebars stem 2, the open slit 6 may, in each case, extend from one end of the respective body 5 adjacent the handlebars stem up towards but short of the other end of the body 5. Although the other end of each body 5 has no open slit and thus has its interior substantially closed off from the outside, the free end of the handlebars 1 can be fed into the body interior 4 sideways on through the open slit 6 as far as possible and the free end of the handlebars then fed axially into the interior of the closed end of the covering body 5 by sliding the latter axially inwardly along said handlebars 1 to complete mounting thereof.

In the above described construction, the body 5, as shown in Fig. 4, may project axially outwardly of the free end of the handlebars 1 and an end seal comprising a cap or stopper 11 may if desired be fitted to the projecting free end of the body 5 to close it.

By this means, the body 5 and handlebars 1 are closed off at their free ends against the entry of water into the interior of the body 5. Alternatively, the body 5 could be formed integral with a covering over the bracket $B$ for mounting of the control lever $L$ mounted on the handlebars 1.

The above described covering 3 of the invention is attached to the handlebars 1 by first pulling back the sliding clasp (conveniently of metal) 7c of the closure 7 to disconnect the teeth 7b from each other to open the slit 6 and then axially feeding the body 5, while the slit 6 remains open onto the handlebars 1 and then finally pulling the clasp 7c to re-engage the teeth 7b and close the slit 6.

As may be seen from the above description, the covering apparatus of the invention can be more simply and quickly mounted on the handlebars 1 of a cycle than a conventional covering. By making the body 5 of a resiliently deformable synthetic polymeric foamed material it is possible to obtain a tighter fit and thus more stable mounting of the covering on the handlebars in use of the cycle, at the same time as providing a comfortable and slide-resistant grip in the rider's hands thereby contributing to overall safety during running of the cycle.

## Claims

1. A covering for cycle handlebars which covering comprises an elongate body (5) having a hollow interior (4) and formed of a synthetic foam material characterised by an open slit (6) extending along one side of said covering, through which slit (6) said hollow interior (4) is open to the exterior, said handlebars being disposable in the hollow interior (4) in use of said covering, and a closure (7) for closing said open slit (6) in said body (5).

2. A covering according to claim 1, wherein said body (5) is formed with a generally elliptical shape in transverse cross-section.

3. A covering according to claim 1 or claim 2, wherein said body has a conduit means (10) for accommodating, in use, a control cable (8) connected to a control lever (L) mounted on said handlebars 1.

4. A covering according to claim 3, wherein said conduit means (10) extends along the interior of said slit (6).

5. A covering according to any one of claims 1 to 4, wherein said body (5) has one longitudinal end provided with a cap or stopper (11) for sealing thereof.

6. A covering according to any one of claims 1 to 5 wherein said closure (10) is in the form of a sliding clasp fastening.

7. A covering according to claim 6 wherein the body (5) is formed of a resiliently deformable synthetic polymeric foam material.

## Patentansprüche

1. Fahrradlenkerverkleidung mit einem langgestreckten Körper (5) mit einem hohlen Inneren, bestehend aus Synthetikschaummaterial, dadurch gekennzeichnet, daß sich ein Öffnungsschlitz (6) längs einer Seite der Verkleidung erstreckt, über welchen das hohle Innere (4) nach außen offen ist, wobei der Lenker im Betrieb im hohlen Inneren (4) der Verkleidung untergebracht werden kann, und daß ein Verschluß (7) vorgesehen ist zum Verschließen des offenen Schlitzes (6) im Körper (5).

2. Verkleidung nach Anspruch 1, dadurch gekennzeichnet, daß der Körper (5) im Querschnitt eine im wesentlichen elliptische Form aufweist.

3. Verkleidung nach Anspruch 1 oder 2, dadurch gekennzeichnet, daß der Körper eine Führungsvorrichtung (10) aufweist zum Unterbringen eines Steuerkabels (8) im Betrieb, welches mit einem auf dem Lenker (1) befestigten Bedienungshebel (L) verbunden ist.

4. Verkleidung nach Anspruch 3, dadurch gekennzeichnet, daß die Führungsvorrichtung (10) sich längs der Innenseite des Schlitzes (6) erstreckt.

5. Verkleidung nach Anspruch 1 bis 4, dadurch gekennzeichnet, daß der Körper (5) an einem Längsende mit einer Kappe oder einem Stöpsel (11) zum Verschließen versehen ist.

6. Verkleidung nach Anspruch 1 bis 5, dadurch gekennzeichnet, daß der Verschluß (7) die Form eines Reißverschlusses hat.

7. Verkleidung nach Anspruch 6, dadurch gekennzeichnet, daß der Körper (5) aus elastisch verformbarem synthetischen Polymerschaummaterial besteht.

**Revendications**

1. Revêtement pour guidon de bicyclette, ce revêtement comprenant un corps allongé (5) à intérieur creux (4) et fabriqué en mousse synthétique, caractérisé par une fente ouverte (6) s'étendant le long d'un côté du revêtement, l'intérieur creux (4) débouchant à l'extérieur à travers cette fente (6), le guidon étant disposé dans l'intérieur creux (4) en position d'utilisation du revêtement, et par une fermeture (7) pour obturer la fente ouverte (6) du corps (5).

2. Revêtement suivant la revendication 1, dans lequel le corps (5) a une section transversale de forme sensiblement elliptique.

3. Revêtement suivant la revendication 1 ou la revendication 2, dans lequel le corps comporte un conduit (10) pour le logement, en utilisation, d'un câble de commande (8) relié à un levier de commande (L) monté sur le guidon (1).

4. Revêtement suivant la revendication 3, dans lequel le conduit (10) s'étend le long de l'intérieur de la fente (6).

5. Revêtement suivant l'une quelconque des revendications 1 à 4, dans lequel le corps (5) comporte une extrémité longitudinale munie d'un bouchon ou d'un obturateur (11) pour sa fermeture.

6. Revêtement suivant l'une quelconque des revendications 1 à 5, dans lequel la fermeture (7) est sous la forme d'une attache à fermoir coulissant.

7. Revêtement suivant la revendication 6, dans lequel le corps (5) est fabriqué en mousse de polymère synthétique élastiquement déformable.

# Fig.1

# Fig.2

# Fig.3

# Fig.4